# EUROPEAN PATENT APPLICATION

(11) **EP 3 048 821 A1**
(43) Date of publication of application: **27.07.2016**
(21) Application number: 16151650.5
(22) Date of filing: 18.01.2016
(51) Int. Cl.: H04W 4/02, H04W 12/02, H04W 12/12, G06Q 30/00, H04L 29/08, G06Q 40/00

(54) **USER VERIFICATION**

(30) Priority: 22.01.2015 GB 201501086
(71) Applicant: Vodafone IP Licensing Limited, The Connection Newbury Berkshire RG14 2FN (GB)
(72) Inventor: Bhasin, Jyoti, London, W2 6BY (GB); Awuah, Ben, London, W2 6BY (GB); Jasuja, Megha, London, W2 6BY (GB)
(74) Representative: Boult Wade Tennant

(57) **Abstract**

A method of verifying user characteristics based on data relating to the user's mobile device, the method being performed at a mobile or wireless telecommunications network and comprising the steps of receiving at a data analysis system of the mobile or wireless telecommunications network via a computer network a query from a remote computer system; the data analysis system retrieving data relating to the user's mobile device from a data store system of the mobile or wireless telecommunications network, wherein the retrieved data is selected based on the query; the data analysis system processing the retrieved data to obtain an answer to the query; and transmitting the answer to the remote computer system.

## Description

### FIELD OF THE INVENTION

This invention relates to a method of user verification utilising services from a mobile telephone network.

### BACKGROUND

Mobile devices connected to wireless networks (for example using, mobile telephone, Wi-Fi, BlueTooth, Li-Fi networks or technologies) are pervasive amongst consumers and possession and use of such devices is becoming universal. Mobile devices can be utilised to provide a range of types of data about users, derived both from the mobile device itself, and the mobile or wireless networks to which the device connects.

Mobile devices are also commonly utilised by service providers to communicate with their customers. A particularly important aspect of such communications from service providers is verifying the identity of a consumer to authorise a transaction or other service.

Mobile network operators may make the data they gather on consumers available to third parties for use in providing services to customers of those third parties. However, the release of such data presents a number of difficulties, including data protection, adhering to consumer terms and conditions, and avoiding loss of control of valuable data.

There is thus a need for a system to allow the use of mobile network operators' data in a safe manner.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A method of verifying user characteristics based on data relating to the user's mobile device, the method being performed at a mobile or wireless telecommunications network and comprising the steps of receiving at a data analysis system of the mobile or wireless telecommunications network via a computer network a query from a remote computer system; the data analysis system retrieving data relating to the user's mobile device from a data store system of the mobile or wireless telecommunications network, wherein the retrieved data is selected based on the query; the data analysis system processing the retrieved data to obtain an answer to the query; and transmitting the answer to the remote computer system.

The query may identify a user of the mobile or wireless telecommunications network, for example by a unique identifier which may be an MSISDN, potentially established using an authentication framework used in the mobile network or an authentication framework used in wireless networks and point-to-point connections such as EAP-SIM, or an identifier provided by the mobile or wireless telecommunications network to the remote computer system to identify the user.

The query may be whether the user's SIM card has been replaced in a predefined period of time, or a request to confirm whether the user is in one or more specified locations.

The answer to the query may be an indication of yes or no.

The answer may comprise an indication of the accuracy to which the user's location could be identified.

The answer may comprise a score dependent on the correlation between the user's location and the location specified in the query.

The method may further comprise the step of obtaining information on the user's location from a Location Services System (LCS) of the mobile or wireless telecommunication network (or any other aspect of that network) in response to the query.

The query may relate to at least one specific time which is included in the query.

The query may be a request for a risk assessment of the user. The data analysis may utilise at least location data or profile data to determine a risk score which is transmitted to the remote computer system.

The data analysis system may also receive data from an external interface to the mobile or wireless telecommunications network, and the external interface may be to a further mobile or wireless telecommunication network.

The response to the remote computer system may be based on data stored in the data storage system, but does not include any data retrieved from the data storage system.

The retrieved data may include at least one of dynamic data, static data, or inferred data.

The step of processing the retrieved data may comprise inferring data from the retrieved data. The inferred data may be the user's inferred home or business location.

The dynamic data may be the user's current location and the static data is a disclosed address.

There is also disclosed a mobile or wireless telecommunications network, comprising a data analysis system configured to receive queries from remote computer systems via a computer network; a data analysis system configured to retrieve data from a data store system of the mobile or wireless telecommunications network based on a received query and to process that retrieved data to obtain an answer to the query; and an access system configured to transmit the answer to the remote computer system from which the query was received.

The mobile or wireless telecommunications network may further comprise a Location Services system (or other system capable of providing location information) configured to provide data to the data analysis system.

The mobile or wireless telecommunications network may further comprise a subscription management system for managing subscription and user data, and configured to provide that data to the data analysis system.

The mobile or wireless telecommunications network may further comprise a call information system for storing the configuration of call services and providing that information to the data analysis system.

The mobile or wireless telecommunications network may further comprise an interface to receive data from other mobile or wireless telecommunications networks and transfer that data to the data analysis system.

The interface may be to a further mobile or wireless telecommunications network.

There is also disclosed a computer system comprising a machine-readable storage medium; and executable program instructions embodied in the machine readable storage medium that when executed by the server causes the server to perform the methods described herein.

The preferred features may be combined as appropriate, as would be apparent to a skilled person, and may be combined with any of the aspects of the invention.

### DESCRIPTION OF THE DRAWINGS

The invention will now be described in detail with reference to the following drawings of which:
Figure 1 shows a schematic diagram of a system for enabling use of a mobile network operator's data;
Figure 2 shows a flow-chart of a method for verifying the identity of a customer;
Figure 3 shows a flow-chart of a method of location assurance;
Figure 4 shows a flow-chart of a method of risk assessment; and
Figure 5 shows a schematic diagram of an exemplary computing-based device.

Throughout the drawings, like reference symbols refer to like features or steps.

### DETAILED DESCRIPTION OF THE INVENTION

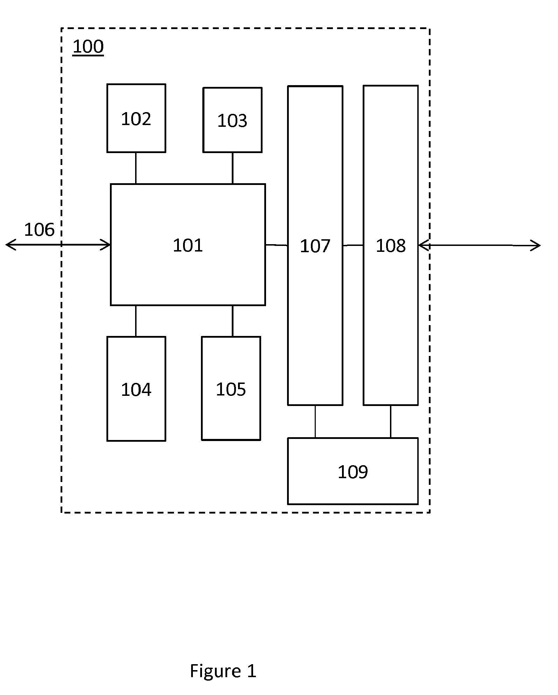

Mobile & wireless Networks, and mobile devices, generate and hold large amounts of data that may be useful to third parties to provide services to consumers. Figure 1 shows a schematic diagram of a system to facilitate the use of that data in a manner that avoids the difficulties identified above.

A mobile network system 100 comprises a wide range of functions and systems to provide mobile telephony and data services to consumers. Only features relevant to the current description are shown and described, but this is not intended to be a comprehensive description of the functions or features of the mobile network system. Data gathering system 101 is a system which gathers data from a wide variety of parts of the mobile network system 100. Particular sources of data include Home Location Register (HLR), probes on signalling links 102, Location Services system (LCS) (103), subscription management system 104, and event information (for example, information relating to call establishment or signalling/data events in the network) system 105.

The HLR 102 records and provides information on where each mobile device is registered in the network. This may be within the mobile network system 100, or in a different network if the mobile device is roaming to an area or country with which the mobile network system operator has an agreement to provide services. When a mobile device registers with a different network its network location is recorded in that network's Visitor Location Register (VLR) and reported to the HLR of that mobile device (or more accurately the HLR of the SIM within the device). The location information may be a general indication of the network to which the mobile device is registered, or a more precise location based on the cell to which the mobile device is connected. More precise location data may also be provided by LCS system 103. The LCS 103 may utilise cell registrations, location data from the mobile device itself (for example GPS), Wi-Fi access points, BLE (BlueTooth Low Energy), or any other source of location information to report the location to the data gathering system 101.

Each type of data may be gathered continuously by the data gathering system or in response to specific requests. The chosen method will vary dependent on the type of data concerned. For example, network registration details may be stored each time a change is made to the HLR records, whereas the LCS may acquire and send detailed location data only on request.

Subscription management system 104 is responsible for managing subscription and user data for subscribers of the network operator. For example, the system may store contact and finance information, product subscription details, and subscrber's privacy preferences. A particular example of product information is a record of SIM cards allocated to a user and requests for new SIM cards or telephone numbers. The management system information may be described as a profile of the user or profile data.

Event information system 105 captures and stores information on a user's event history and changes over time. Examples of the data captured would be call information, changes to call forwarding, location, service subscription profile etc.

Data gathering system 101 may also have an interface 106 to other mobile and wireless networks to gather comparable information from those networks. This allows the system 100 to gather and utilise information for users with subscriptions to other networks, thus improving the quality of services provided to third parties. Mobile devices may connect to different mobile or wireless networks in different locations and using different technologies. Each type of connection may yield different types and qualities of data. For example, it is common for mobile devices to connect to a wireless network and also to a Wi-Fi access point when one is in range. Those access points may be both personal or private points, or public points providing a hotspot service. A Wi-Fi access point connection may provide better location data than a mobile network if no GPS location data is available, but such data may be less reliably obtained as the Wi-Fi access points may be operated by third parties. The interface 106 may also be to mobile networks operated by different operators and thus the system described herein can be utilised to provide responses even for customers of the third party who are not subscribers to mobile or wireless network 100.

The systems 102 - 105 and interface 106 are given as examples only and different systems and interfaces may also be provided. Furthermore, the sources of information and division between systems is given by way of example only and the specific source and location of information will be defined, in accordance with the principles described herein, on a system-by-system basis dependent on how the particular operator has configured their systems.

Analysis system 107 is configured to retrieve data from the data gathering system 101 and to perform analysis on that data as set out in detail below. Access system 107 may retrieve data from gathering system 101, or directly from the systems 102 - 105 and interface 106. Furthermore, the systems 102 - 105 and interface 106 may share data such that more data can be gathered from multiple sources. For example, event information system 105 may receive and store data from LCS 103 each time a location is updated. The storage and retrieval system will be configured depending on the nature of the data and use being made. For example, some uses may require real-time data, in which direct access may be made to systems such as the HLR, whereas in other cases latency may not be a problem, but large amounts of data may be needed, in which case gathering system 101 may be a more appropriate system As explained below, the systems 101-109 are divided as shown in Figure 1 purely for convenience of explanation and other divisions of functionality are equally possible. Access system 108 provides an external interface to which third parties can connect to request information from the analysis system 107. An access and subscription system 109 maintains subscription details for third parties and defines permissions for access system 108 and the services which may be provided to each third party. The access and subscription system 109 may also retain details of the behaviour and functions of the analysis system 107 for each third party. The access system 108 provides user authentication and access control systems to ensure only authorised users can connect.

Access system 108 allows third parties to make a connection and issue queries to analysis system 107. Queries made to the analysis system 107 may request the system to confirm certain details, or to perform an analysis on data of the data gathering system 101, but in general are not requests for actual information. The actual information is retained within the data gathering system 101, event information system 105 and analysis system 107 and is not released to third parties, thus addressing the difficulties explained above for previous systems. However, the services provided by the analysis system enable third parties to benefit from the data and provide services based on it.

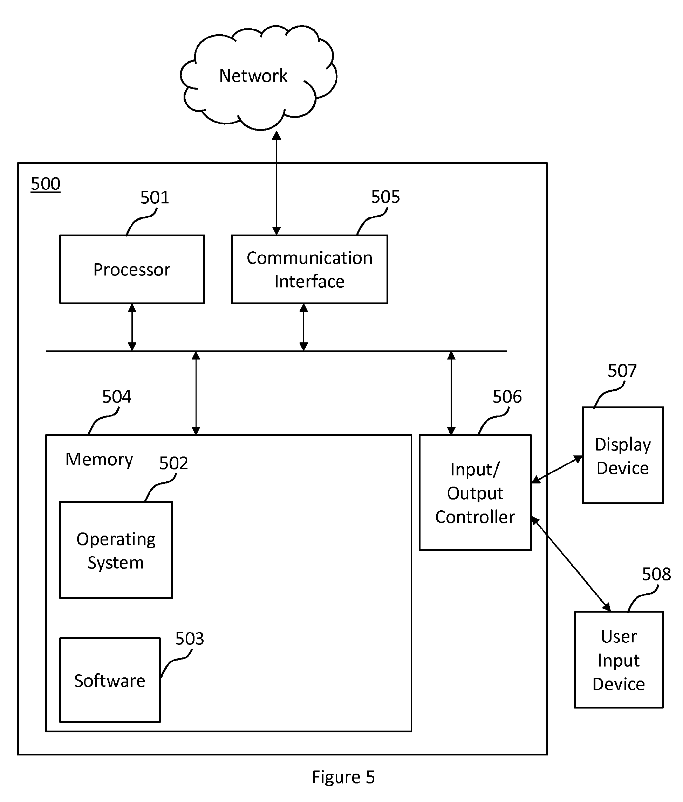

The systems described with reference to Figure 1 may be implemented using a single or multiple conventional computing systems. Those computing systems may be "server" systems which performs tasks without user supervision and which respond to queries from other systems. Where multiple computing systems are utilised those systems may be co-located, or distributed in a number of locations and interconnected by a computer network. Each system may comprise volatile and non-volatile memory, processors, and other components as is well known for conventional computing systems. An exemplary computing system is shown in Figure 5 and described below.

The access system 108 may be provided by a discrete computing system or in combination with other of the systems. The access system 108 may comprise one or more APIs to allow third parties to connect and issue queries. Discrete APIs may be provided for user verification and each individual query, or functions may be combined. Other means of allowing third parties to connect to the system may also be utilised as is known in the art. Third parties may connect to the access system using a computer network such as the internet, via any known computer connection method.

Third parties may connect to the access system using any known authentication method, for example, username and password or other system incorporated into the provision of an access point using an API. Entitlement of a party's to transmit queries in relation to a user is stored by the access and subscription system 109, or other system, and that entitlement is verified upon a query being received. Permission for a particular third party to access that information may be obtained from the user/customer at any point, for example during setup of the mobile network subscription, opening of a financial account or any transaction with the third party. The permission may be gathered in any way, for example a tick box on a form or within software. The permission may be granted for all queries, or on a case-by-case basis.

Other security mechanisms may also be utilised, for example VPN services to trusted third parties, or whitelisting network addresses.

A number of examples are provided below of types of queries, processing, and outputs enabled by the configuration shown in Figure 1. These are given by way of example only and are not restrictive of the system in any way.

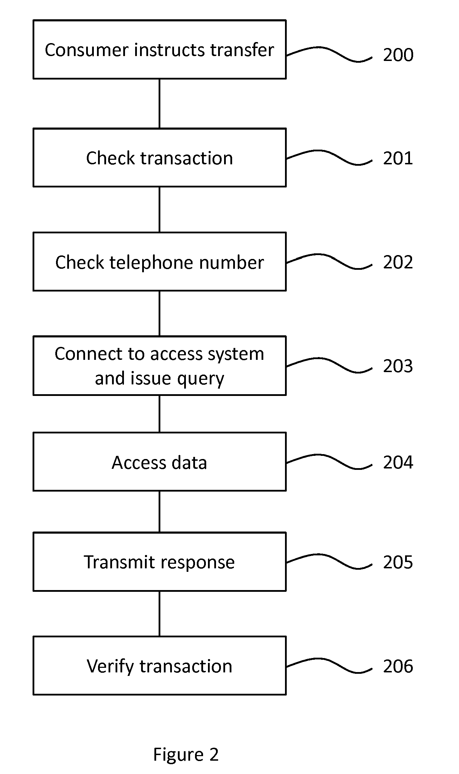

Figure 2 shows a method to assist a financial institution in verifying the identity of a customer for a transaction. It is common for banks to hold a telephone number for a customer for use in verifying transactions. At step 200 a customer instructs their bank to make a large money transfer to a different account. At step 201 the bank checks the details of the transfer and because those details meet certain criteria additional security steps are initiated. For example, the amount may be above a certain threshold. Those security steps involve contacting the customer by telephone to verify that they correctly instructed the transfer.

At step 202 the bank system determines that the telephone number on record is a mobile telephone number. At step 203 the bank connects to the access system 108 and issues a query to the analysis system 107. That query may enquire whether the customer's SIM has been swapped in the last 24 hours (or other time period as deemed appropriate), or has any call forwarding options activated. The customer may be identified in the query by the telephone number (MSISDN), or other identifier which links the query to a particular customer of the mobile operator. At step 204 the analysis system 107 accesses the data gathering system 101 and obtains the necessary data to respond to the query, for example from subscription management system 104 and/or call information system 105. The analysis system 107 processes the data in order to derive an answer for the query. At step 205 the analysis system 107 sends a "yes or no" response to the bank. At step 206 the bank utilises the response to guide how to proceed in verifying the transaction.

A known fraud is to impersonate a target and request a new SIM for the target's telephone number. The physical SIM is intercepted by the fraudulent party and is used in their mobile device to pretend to be the target. For example, the fraudulent party may have acquired the customer's bank log-in details and instructed a bank transfer. When the bank seeks to call the target (their customer) to verify the transaction their call is actually received by the fraudulent party who intercepted the new SIM and they can pretend to be the target to verify the fraudulent transaction. The method described in relation to Figure 2 will help prevent this fraud because the bank will be aware that a new SIM has been issued, or call forwarding is activated, and will take extra precaution in verifying the transaction. For example, they may require further identification beyond a simple telephone call before authorising the transaction, or may utilise a different communication means to contact the target.

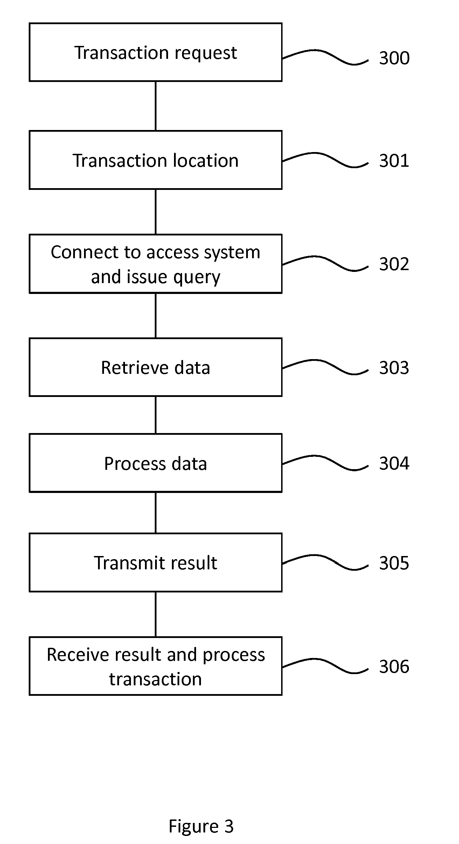

Figure 3 shows a method of location assurance, for example for utilisation by a financial institution. At step 300 the financial institution receives a request for a transaction. For example, this might be a payment card transaction.

At step 301 the financial institution ascertains a location related to the transaction, which is typically the location of the merchant at which a payment card transaction is being performed. This location may be determined from information received from the payment terminal or the identity of the merchant received with the transaction request. At step 302 the financial institution connects to the access system 108 and transmits a query to the analysis system 107. The query may be in the form "Is the user at location X?" where X is the location identified in step 301. The user may be identified in the query by a mobile telephone number provided by the user to the financial institution or another identifier agreed between the financial institution and operator of the mobile network system 100. At step 303 the analysis system retrieves the appropriate data from the data gathering system 101 in order to respond to the question. This data may be location data from the HLR 102 or LCS system 103. At step 304 the analysis system processes the data to produce a response to the query.

The response may be a yes/no response, or a more detailed response conveying information on the correlation of the actual location to the question. For example, the question may specify an address in a town. If it can be determined that the mobile device is at that address (for example by the LCS 103 receiving a current GPS location) a maximum score of 1000 may be returned. If it is ascertained that the mobile device is in the same town as the query, then a score of 700 may be returned. As the correlation of the location to the query reduces, the returned score is decreased. As well as the correlation score, the analysis system may also transmit an indication of how accurately the analysis system can determine the location. For example, if a precise location is available from the LCS 103 a maximum score for accuracy may be returned. However, if it is only possible to determine the country from the HLR 102 then a low score for accuracy may be returned.

If both the correlation and accuracy scores are high and the location matches the query then there is a high probability the mobile device is at the location of the transaction. However, if the correlation score is low (for example indicating a different location in the same country), but the accuracy score is high, this is an indication the mobile device is not with the transaction. In contrast, an indication that the mobile device is in the same country, together with a low accuracy score (e.g. only possible to determine the country) may give a more positive indication of the mobile device being at the location of the transaction.

At step 305 the results of the analysis are transmitted to the financial institution. The correlation and accuracy values discussed above, or an overall confidence value indicating how probable it is that the mobile device is at the location of the transaction, may be transmitted. In either case the actual data is not transmitted, but rather the analysis system 107 takes responsibility for the data processing, and returns only a response to the query. This addresses the difficulties discussed hereinbefore, but still allows the data to be utilised by third parties. At step 306 the financial institution receives the response and decides whether to authorise the transaction or not. A threshold may be applied to the probabilities returned from the analysis system to decide how to proceed, and that threshold may be dynamic dependent upon parameters of the transaction. For example, a higher threshold may be set for higher value transactions.

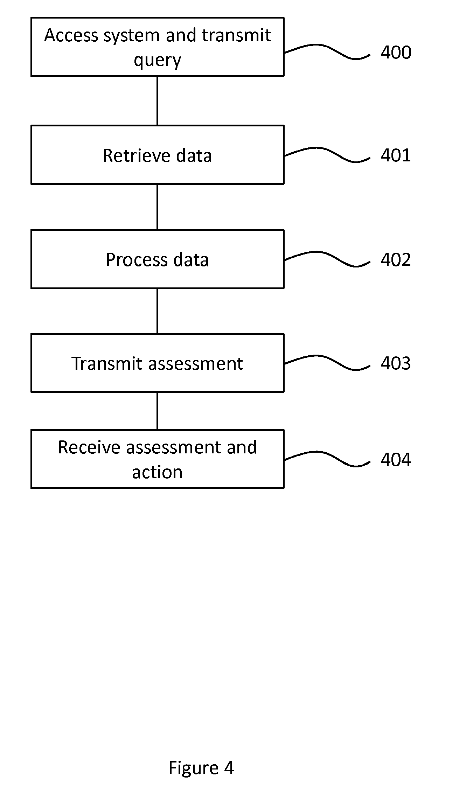

Figure 4 shows a method for ascertaining a risk assessment score for a customer. For example, an insurance firm may wish to gather information on the worthiness of a customer or potential customer for use in providing an insurance product. At step 400 the third party connects to the access system 108 and transmits a query to the analysis system 107 requesting a risk assessment. The user may be identified by a telephone number provided to the insurance firm, or by another identifier agreed between the insurance firm and mobile network operator.

At step 401 the analysis system 107 retrieves the required data from the data gathering system 101. For this type of query the data is likely to include historical location data from system 105. At step 402 the analysis system 107 processes the data to calculate a risk assessment score. For example, the locations in which the customer spends significant time may be analysed and compared to known metrics for the relative safety/risk of those areas. More detailed location data may be utilised to determine use of modes of transport, or the times at which a customer travels to further decrease the premium. At step 403 the risk assessment value is transmitted to the insurance firm, and at step 404 the receiver can decide how to proceed based on the data. The information received would allow insurance firm to offer better products and services to prospective customers..

Mobile network operators often have data on consumers which is more up to date than many other enterprises. For example, as a minimum the network operator is likely to have an up to date telephone number for the user. Furthermore, since consumers tend to be relatively portable between mobile telephone operators it is likely that consumer's information has been collected relatively recently and is thus more likely to be up to date and accurate. Queries to the analysis system may be utilised by third parties to verify whether information they hold is current. For example, they may transmit the information they hold and the analysis engine may respond with a yes or no to indicate whether than information is correct. If the information is not correct, the mobile network operator may offer to transmit a message to the customer indicating they should contact the third party. The analysis system may also be used by third parties for other checks, for example a request from an enterprise company whether a particular employee is in a certain high risk area and provide communications or take actions accordingly. The analysis system may also be configured to monitor parameters such as location and to issue an alert to a third party via the access system 108. Access system 108 may thus be configured to also initiate communications with third parties as well as receive and respond to communications. Previously performing such data checks would have required the entire data set to be transferred to a third party and processed by that party, exposing the data to the difficulties identified above.

The analysis methods and response parameters discussed above are given as examples only and as appreciated other methods and parameters may be utilised as appropriate.

The various methods discussed above maybe utilised in any combination in order to gain additional information. For example, for financial transactions a combination of the methods of Figures 2 and 3 may be utilised. These may be combined into a single query, returning either a single or multiple values, or may be performed separately.

The different types of data discussed herein may be general classified in three ways - dynamic data (such as current location), inferred data (such as home location which may be calculated from position at certain times of day), and static data (such as declared invoicing address). The classifications of data may be used in combination to verify the user information. In a specific example, during bank account setup a financial institution may utilise a combination of users current location (dynamic data), home location (inferred from mobile device position on a number of nights), and their mobile device invoicing address (static data), to get a stronger verification to minimise instances of fraud on genuine customers.

References in the above description to retrieving data from the data gathering system include retrieving data from other mobile and wireless network systems via interface 106. This interface may operate via the data gathering system 101, or event information system 105 which are connected to analysis system 107. The services and functions described above may thus be provided even for customers of different mobile networks.

The systems and methods described herein reduce data transmission needs to accomplish the data processing tasks described. In previous systems it was necessary to transmit large amounts of data to third parties for processing. The same data would be transmitted to each third party wishing to process the data. This transmission is avoided by performing the processing in the network operators systems.

In previous systems complex data replication systems were required to ensure the data held by third parties remained current. Such systems are not required in the systems and methods described herein because all processing is performed on an internal data store.

In previous systems third parties needed legal compliance to complex Data protection acts for transfer, processing and storage of personal data obtained from network operator. The systems and methods disclosed herein may remove the need for such compliance by third parties as no end-user personal data is transferred.

The systems and methods also reduce the communication links from the third parties to multiple network operators. Only a single link is required from the system to each other network operator allowing all networks' information to be gathered in one location, rather than a web of links from all third parties to all network operators. The communication systems are therefore simplified.

Where data is described as being related to a mobile device, or a mobile device's user, this is not intended to restrict the data as being strictly and directly related to the device or user, but rather to include data related to any aspect of a device, its use, or its user. For example, a user's contact information and profile at the mobile network operator is considered to relate to the user's mobile device.

The various systems and functions described herein may be implemented in a single computing system, or in multiple networked computing systems. The divisions between systems in this description need to be followed in an implementation, but have only been used for clarity of explanation. The actual implementation may be dependent on a range of parameters and requirements of the operator. In particular the data gathering system and analysis system may be provided as a single system, comprising a processing system to receive, process, and analyse the data and a data storage system (such as non-volatile computer memory) to store the data. The systems may be centrally located or may be distributed. As will be appreciated some functions are optional and may be omitted, while additional functions may also be provided, without moving outside the scope of this disclosure.

Functions relating to the processes described herein may be implemented on computers connected for data communication via the components of a packet data network. Although special purpose devices may be used, such devices also may be implemented using one or more hardware platforms intended to represent a general class of data processing device commonly used so as to implement the functions discussed above, albeit with an appropriate network connection for data communication.

As known in the data processing and communications arts, a general-purpose computer typically comprises a central processor or other processing device, an internal communication bus, various types of memory or storage media (RAM, ROM, EEPROM, cache memory, disk drives etc.) for code and data storage, and one or more network interface cards or ports for communication purposes. The software functionalities involve programming, including executable code as well as associated stored data. The software code is executable by the general-purpose computer that functions as the server or terminal device used for transmitting queries, analysing data, or responding to queries, or any other relevant function. In operation, the code is stored within the general-purpose computer platform. At other times, however, the software may be stored at other locations and/or transported for loading into the appropriate general-purpose computer system. Execution of such code by a processor of the computer platform or by a number of computer platforms enables the platform(s) to implement the methodologies described herein.

Those skilled in the art will be familiar with the structure of general purpose computer hardware platforms. As will be appreciated, such a platform may be arranged to provide a computer with user interface elements, as may be used to implement a personal computer or other type of work station or terminal device. A general purpose computer hardware platform may also be arranged to provide a network or host computer platform, as may typically be used to implement a server.

Figure 5 illustrates various components of an exemplary computing-based device 1100 which may be implemented as any form of a computing and/or electronic device, and in which embodiments of any one or more of the systems described herein be implemented. For example, the systems 101-109 of Figure 1 may be implemented using computing-based devices having some or all of the features shown in Figure 5

Computing-based device 500 comprises one or more processors 501 which may be microprocessors, controllers or any other suitable type of processors for processing computer executable instructions to control the operation of the device in order to provide the functionality described hereinbefore. In some examples, for example where a system on a chip architecture is used, the processors 501 may include one or more fixed function blocks (also referred to as accelerators) which implement a part of the methods described hereinbefore in hardware (rather than software or firmware). Platform software comprising an operating system 502 or any other suitable platform software may be provided at the computing-based device to enable application software 503 to be executed on the device.

The computer executable instructions may be provided using any computer-readable media that is accessible by computing based device 500. Computer-readable media may include, for example, computer storage media such as memory 504 and communications media. Computer storage media, such as memory 504, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 504) is shown within the computing-based device 500 it will be appreciated that the storage may be distributed or located remotely and accessed via a network or other communication link (e.g. using communication interface 505).

The computing-based device 500 may also comprise an input/output controller 506 arranged to output display information to a display device 507 which may be separate from or integral to the computing-based device 500. The display information may provide a graphical user interface. The input/output controller 506 may also be arranged to receive and process input from one or more devices, such as a user input device 508 (e.g. a mouse or a keyboard). In an embodiment the display device 507 may also act as the user input device 508 if it is a touch sensitive display device. The input/output controller 506 may also output data to devices other than the display device, e.g. a locally connected printing device (not shown in Figure 5).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Aspects of the methods described herein may be embodied in programming. Program aspects of the technology may be thought of as "products" or "articles of manufacture" typically in the form of executable code and/or associated data that is carried on or embodied in a type of machine readable medium and/or in a plurality of such media. "Storage" type media include any or all of the tangible memory of the computers, processors or the like, or associated modules thereof, such as various semiconductor memories, tape drives, disk drives and the like, which may provide non- transitory storage at any time for the software programming. All or portions of the software may at times be communicated through the Internet or various other telecommunication networks. Such communications, for example, may enable loading of the software from one computer or processor into another. Thus, another type of media that may bear the software elements includes optical, electrical and electromagnetic waves, such as used across physical interfaces between local devices, through wired and optical landline networks and over various air- links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like. Volatile storage media include dynamic memory, such as main memory of such a computer platform. Tangible transmission media include coaxial cables; copper wire and fibre optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Although the present invention has been described in terms of specific exemplary embodiments, it will be appreciated that various modifications, alterations and/or combinations of features disclosed herein will be apparent to those skilled in the art without departing from the spirit and scope of the invention as set forth in the following claims.

## Claims

1. A method of verifying user characteristics based on data relating to the user's mobile device, the method being performed at a mobile or wireless telecommunications network and comprising the steps of
receiving at a data analysis system of the mobile or wireless telecommunications network via a computer network a query from a remote computer system;
the data analysis system retrieving data relating to the user's mobile device from a data store system of the mobile or wireless telecommunications network, wherein the retrieved data is selected based on the query;
the data analysis system processing the retrieved data to obtain an answer to the query; and
transmitting the answer to the remote computer system.

2. A method of verifying user characteristics according to claim 1, wherein the query identifies a user of the mobile or wireless telecommunications network.

3. A method of verifying user characteristics according to claim 2, wherein the user is identified by a unique identifier.

4. A method of verifying user characteristics according to any preceding claim, wherein the query is whether the user's SIM card has been replaced in a predefined period of time.

5. A method of verifying user characteristics according to any preceding claim, wherein the query is a request to confirm whether the user is in a specified location.

6. A method of verifying user characteristics according to claim 5, wherein the answer comprises an indication of the accuracy to which the user's location could be identified.

7. A method of verifying user characteristics according to claim 5 or 6 wherein the answer comprises a score dependent on the correlation between the user's location and the location specified in the query.

8. A method of verifying user characteristics according to any of claims 5 to 7 further comprising the step of obtaining information on the user's location from a Location Services System (LCS) of the mobile or wireless telecommunication network in response to the query.

9. A method of verifying user characteristics according to any of claims 5 to 8 wherein the query relates to at least one specific time which is included in the query.

10. A method of verifying user characteristics according to claim 1, wherein the query is a request for a risk assessment of the user.

11. A method of verifying user characteristics according to claim 10, wherein the data analysis utilises at least location data to determine a risk score which is transmitted to the remote computer system.

12. A method of verifying user characteristics according to claim 10, wherein the data analysis utilises at least profile data to determine a risk score which is transmitted to the remote computer system.

13. A method of verifying user characteristics according to any preceding claim, wherein the data analysis system also receives data from an external interface to the mobile or wireless telecommunications network.

14. A method of verifying user characteristics according to any preceding claim, wherein the response to the remote computer system is based on data stored in the data storage system, but does not include any data retrieved from the data storage system.

15. A method of verifying user characteristics according to claim 1, wherein the retrieved data includes dynamic and static data.

16. A method of verifying user characteristics according to claim 1 or claim 15, wherein the retrieved data includes inferred data.

17. A mobile or wireless telecommunications network configured to perform the method of any preceding claim.

18. A computer system comprising:
a machine-readable storage medium; and
executable program instructions embodied in the machine readable storage medium that when executed by the server causes the server to perform a method according to any of claims 1 to 17.
